# EUROPEAN PATENT APPLICATION

(11) **EP 4 412 022 A1**
(43) Date of publication of application: **07.08.2024**
(21) Application number: 24154370.1
(22) Date of filing: 29.01.2024
(51) Int. Cl.: H02J 3/32, H02J 7/00, H02J 7/35, H02J 9/06

(54) **PROCESS FOR INCREASING THE RECHARGING EFFICIENCY OF AN ENERGY STORAGE SYSTEM**

(30) Priority: 02.02.2023 IT 202300001689; 02.02.2023 CH 902023
(71) Applicant: Patavium Energia S.p.A., 35129 Padova (IT)
(72) Inventor: Pentimalli, Pierluigi, 35030 Selvazzano Dentro (PD) (IT)
(74) Representative: Fabiano, Piero

(57) **Abstract**

The invention relates to a process for increasing the recharging efficiency of an energy storage system when, said energy is withdrawn from the public and/or national electricity grid and is used to recharge, in advance with respect to when it will be subsequently used, one or more accumulators and/or storage systems (20) present in an electrical system, where the process is implemented by means of a computerized system acting on an inverter for managing the accumulators and/or storage systems, wherein said computerized system comprises at least one memory storage unit and at least one control unit configured to perform at least the following steps
- a) monitoring the state of charge of one or more accumulators and/or storage systems (20) and the energy exchanged by them with the inverter (30) and/or the plant (10,15,100) during the charge/discharge phases over a time span;
- b) monitoring the consumption profile of a user of the above-mentioned installation (10,15,100) over a time span;
- c) monitoring the energy withdrawal profile from the public and/or national electricity grid of a user over a time span in the context of this installation (10,15,100);
- d) estimation of the user's and/or plant's subsequent consumption and/or withdrawal profile (10,15,100) over a time span subsequent to a point in time of observation;
- (e) analysis of changes in the price of electricity related to market developments and estimation, with respect to a point in time of observation, of the possible trend of the price of electricity over a time span following that point in time of observation;
- (f) storage, management and aggregation of the data collected in phases (a) to (e) both in real time, namely at a given instant, and in an aggregate and/or statistical manner over time;
and, on the basis of said data obtained from said monitoring and estimates, determination of the next most appropriate instant (T_{S}) with respect to the time of observation for generating a command to start the recharging process of the accumulators and/or the storage systems (20) in the time period corresponding to the lowest values of the estimated price of energy wherein said recharging process is terminated at a later time (T_{E}) upon reaching a predetermined amount of energy (_{STARGET}) - from time to time calculated by means of said estimates - to be preemptively stored in the accumulators and/or in the storage systems (20) with the aim of making available, in said systems and where indispensable, the energy required for subsequent consumption by withdrawing it in advance, prior to its use, from the public and/or national electricity grid at the lowest possible estimated purchase price.

## Description

### FIELD OF THE INVENTION

The present invention relates to a process for increasing the recharging efficiency of an energy storage system. In particular, the process of the invention applies when, said energy, is withdrawn from the public and/or national electricity grid and is used to recharge, in advance of its subsequent use, one or more accumulators and/or storage systems present in an electrical system.

### PRIOR ART

As is well known, there are electrical installations that are equipped with one or more batteries and/or storage systems, which can supply energy in all those situations where the installation requires it.

An example of this category of electrical installations is given by photovoltaic systems, which can be equipped with one or more batteries and/or storage systems to store energy during the day and then supply it to the system at night or when solar irradiation is insufficient.

Similar situations can be found for wind turbines as wind strength is certainly variable over time.

The same applies to plants that combine photovoltaics and wind power.

Similarly, this applies to all those power generation plants conditioned by the presence of one and/or more natural phenomena which, due to their intrinsic nature, are not available 24 hours a day or which, for example, are seasonal.

Further examples of these generation systems are thermo-electric-mechanical conversion (TEM) systems that convert temperature gradients into electrical energy.

In all these cases, therefore, the use of a storage system, generally consisting of one or more accumulators and/or batteries and, optionally, a control system (BMS, 'Battery Management System'), gives the installation the possibility of having the stored energy available for use even at those times when the generation of the energy itself by the production systems is no longer intrinsically possible.

According to the prior art, storage management systems charge the batteries first of all by taking energy from the local (for example photovoltaic) generation plants connected to the power system and, where this energy is not sufficient, in some cases they intervene by charging the accumulators by taking it also from the public and/or national power grid.

This is the case when, during the winter months or days of bad weather, the photovoltaic system does not produce enough energy to meet the user's needs over a 24-hour period and, even if a part of it is stored for use in the evening, this is not enough. In this case, the installation's management systems draw energy from the public and/or national power grid both to power all electrical and electronic devices connected to the installation and - if appropriate - to charge the accumulators.

According to the prior art, in fact, when the percentage of residual charge in the accumulators is below a pre-set threshold, they are charged regardless of the time of day and regardless of whether the local generation plant, if any, supplies all or part of the energy needed at that given time with respect to the energy available, taking the missing energy from the public and/or national grid. This functional characteristic is common to almost all of the control and management equipment of storage systems used today, which impose a minimum charge percentage below which it must never fall; this minimum working threshold is essential for each individual accumulator to prevent its degradation over time as well as the initiation of safety shutdown procedures.

Thus, recharging can of course take place when the local energy production plant (for example photovoltaics) is inherently unable to generate it, thus recovering the energy required for the operation of the storage system from the local and/or national public electricity grid even at times when the cost is high, all to the detriment of the economic operation of the plant. Generally, the storage management system then recharges the batteries up to a further preset maximum value that may not necessarily correspond to 100 per cent of the total capacity of the storage system itself.

A variant of these known systems is that the batteries are recharged, even regardless of their state of charge, up to a certain preset maximum percentage but at a certain time, for example during the night where, generally, the cost of energy is lower for those users who have signed a time-based electricity supply contract, for example. In known systems, this time is fixed and pre-set by the user - generally at night - in the storage system, namely in the electronic device that manages the batteries and/or accumulators and takes care of the conversion of energy from the local power system using, in this case, the public and/or national power grid as a source.

A further variant known in the art provides for the combination of said modes, activating recharging after a predetermined time and only if the amount of residual energy in the batteries is less than a certain preset threshold even higher than the previously mentioned safety threshold.

The above also applies to different types of storage systems, not necessarily based on batteries, but on other energy storage devices that use different physical principles and that require, for their operation, not to fall below certain levels of available energy or, merely by way of example, operating temperature.

However, it is also known that, due to recent international events, the cost of electricity has become highly volatile, rising very significantly in a sometimes unpredictable manner. Therefore, the issue of energy saving has become increasingly pressing for both end users, households and companies.

It is also well known that energy prices are determined through trading on national and international trading markets, prices which also depend on the relationship between supply and demand. That is, when there is more demand for energy and less supply, prices tend to rise regardless of other boundary conditions; conversely, when there is more supply than demand for energy, prices tend to fall.

It is therefore an aim of the present invention to provide a process for optimizing the cost of purchasing energy from the public and/or national power grid regardless of the type of any local power generation systems present in the user's plant.

Therefore, this process applies to all installations of those users either equipped with one or more local energy generation systems, or not equipped with such systems but equipped with an energy storage system not necessarily consisting of batteries and electrolytes, but also energy storage systems based on different physical principles such as thermoelectric, thermodynamic, kinetic, gravitational, flow systems or based on the storage of hydrogen or any other gas or natural element.

In the case of plants equipped with storage systems, namely with and without additional local energy sources in addition to the public and/or national power grid, the cost of recharging accumulators can be optimized through this process by exceeding the cost-effectiveness of known technology.

A further purpose of the present invention is to combine the economic advantages of effectively optimizing the costs of recharging accumulators by means of the relevant management systems for an individual user, whether residential or business, by applying the same process to a plurality of users, namely on a large scale both nationally and within 'energy communities', obtaining benefits for all users of the electricity grid, national and/or local, thanks to the generalized levelling down of energy prices due to the fact that the adoption of this solution on a large scale advantageously rebalances the relationship between energy supply and demand at those times when there is more supply and less demand.

The process according to the present invention adapts dynamically to various operational parameters including the trend of energy prices as estimated over a time span following a point in time of observation. In this way, if applied on a large scale, it is capable of dynamically rebalancing energy prices downwards even in the event of their variation and even where, with respect to an already rebalanced supply/demand relationship, there are significant deviations in the prices themselves due, for example, to the availability of new, low-cost energy sources.

Not the least purpose of the invention is to achieve the above-mentioned results in a practical and efficient manner.

### SUMMARY OF THE INVENTION

The above-mentioned purposes are obtained by means of a process for increasing the recharging efficiency of an energy storage system, when said energy is drawn from the public and/or national electrical grids and is used to recharge, in advance of its subsequent use, one or more accumulators and/or storage systems present in an electrical installation, wherein the process is implemented by a computerized system acting on a management inverter of the accumulators and/or storage systems, wherein the aforesaid computerized system comprises at least one memory storage unit and at least one control unit configured to carry out at least the following steps:
- a) monitoring the state of charge of one or more accumulators and/or storage systems and of the energy exchanged by them with the inverter and/or the installation in the charging/discharging steps over a time span;
- b) monitoring the energy consumption profile of a user of the aforesaid installation over a time span;
- c) monitoring the user's profile of energy drawing from the public and/or national electrical grids over a time span in the context of the aforesaid installation;
- d) estimating, with respect to an observation time, the subsequent energy consumption and/or drawing profile of the user and/or installation over a time span following said observation time;
- e) analyzing the price changes of the electric energy which are related to the market trend and estimating, with respect to an observation time, the possible trend of the price of electric energy over a time span following said same observation time;
- f) storing, managing and aggregating data collected in steps a) to e) both in real time, namely at a given instant, and in an aggregate and/or statistical manner over time;
and, on the basis of the aforesaid data detected from the above-mentioned monitoring and estimates, determining the most appropriate subsequent instant (T_{S}) with respect to the observation time for generating a command to start the recharging process of the accumulators and/or storage systems over the time period corresponding to the lowest values of the estimated energy price, wherein the aforesaid recharging process is ended at a subsequent instant (T_{E}) upon reaching a pre-set amount of energy (S_{TARGET}) - from time to time calculated by means of said estimates - to be preventively stored in the accumulators and/or storage systems with the aim of making available, in said systems and where indispensable, the energy necessary for the subsequent consumption by drawing it in advance, prior to its use, from the public and/or national electrical grids at the lowest possible estimated purchase price.

Among the advantages of the present invention is the fact that it makes it possible to obtain, for each individual user in a specific manner with respect to different consumption habits, a lower cost on energy than the prior art whereby the withdrawal meter (typically referred to as 'M1') is billed, for example in Italy, at an indexed PUN (Unique National Price) which, in terms of price, changes over time.

This logic can lead to greater savings than simply recharging storage systems in the F3 time slot, which is generally cheaper than the F1 and F2 time slots. Savings that, in any case, also occur by operating according to the method represented here for said recharging, by taking all or part of the necessary energy estimated from the public and/or national electricity grid in advance in the cheapest possible time slot and then using it in the less convenient slots.

Advantageously, the process according to the present invention, adapting to each individual installation and user, is applicable to residential as well as industrial electrical installations and, more generally, to business users. In this case, the data sources and decision logics are the same as for residential users, while changing certain operational parameters such as, for example, the power of the meter and the overall capacity of the storage systems, as well as, above all, the consumption profiles according to the characteristic activity of the business and, consequently, the specific needs for energy production and storage as well as withdrawal from the public and/or national electricity grid.

The process of the invention can be generalized to a plurality of residential and/or business/industrial users including energy communities, extending said benefit on a large scale, also by means of the aggregate analysis of the historical consumption of a plurality of users, both in relation to the optimization of the relationship between supply and demand at times when there is less demand for energy, and thanks to the continuous optimization of the time periods of energy purchase which allow the process to adapt dynamically over time to the trend in energy prices.

Advantageously, this data analysis and the related decision-making process can be carried out by means of algorithms capable of learning over time the consumption habits of each individual user, namely all the consumption and withdrawal profiles of a given plant as well as, if present, learning the amount of energy generated locally, for example but not limited to photovoltaic plants, estimating their subsequent production by combining all this information with the estimated energy purchase prices and the expected energy requirements, related to the user himself and consequently to the plant, in the context of a time span following a moment of observation.

Advantageously, time learning of such algorithms can operate on an instantaneous, quarter-hourly, hourly, daily, weekly, monthly or any large time observation window, either preset or time-varying, namely adaptive.

Advantageously, in the case of local energy generation plants, for example but not limited to photovoltaic plants, the estimation of production in a time span after a point in time of observation can be based on public information sources and databases, such as the European PV-GIS, but also on professional meteorological data sources.

By means of these algorithms, integrating information from energy trading markets, exchanges and local and/or national operators, the energy price trend over the following hours, days, weeks and months is determined from the time of observation with a gradually increasing degree of error. Advantageously, by using close observation periods and, therefore, analyzing and statistically extrapolating data and information from the various sources, for example several times within an hour, it is possible to realign the forecasts in a continuous manner, leading to an increasingly precise estimate of the price of energy taken from the public and/or national electricity grid, for example but not limited to the following 24/48/72 hours.

Advantageously, these algorithms can both analyze real time data, aggregated data as well as time-series based data from different possible learning periods to make the best possible decisions, customized for each user, instructing the respective commands to start, manage and stop the charging processes of accumulators and/or storage systems.

Advantageously, the process of the invention can also be implemented by means of neural networks and/or self-learning artificial intelligence systems in such a way that cognitive maps customized for each user can be constructed to instruct the respective commands to start, manage and stop the charging processes of accumulators and/or storage systems.

We would like to point out that the expression "moment of observation" means any appropriately chosen moment of observation. The expression "time span" means any appropriately chosen time span of any duration. Thus, the moment of observation and the time span can be chosen as required. Both are neither predefined a priori, nor predetermined, but depending on the number of observations being made over time (for example 3-4-5 per hour), the amplitudes, namely the durations, of the successive time spans under consideration may also vary. The moments of observation and the amplitudes of the time spans, determined by means of this method, also depend on other factors detected and/or measured continuously during the operation of the plant related, for example, to variations in the user's consumption with respect to forecasts, variations in the production of local generation plants, variations in energy prices, etc.

Further features of the invention may be deduced from the dependent claims.

### BRIEF DESCRIPTION OF THE FIGURES

Further features and advantages of the invention will be apparent from reading the following description provided by way of example and not limitation, with the aid of the illustrations in the accompanying tables, in which:
- Figure 1 schematically illustrates a first electrical system, equipped with battery(s) and storage management inverter(s), to which the process according to an embodiment of the invention can be applied. The inverter can directly manage the battery(s) and/or the storage system, or do so by means of a possible specific management system of the storage system called BMS ("Battery Management System");
- Figure 2 shows schematically a different handling of the electrical loads connected to the electrical system compared to Figure 1;
- Figure 3 schematically illustrates the electrical system of the preceding figures extended with photovoltaic modules connected to the storage management inverter, to which the process according to an embodiment of the invention, in turn connected to the accumulators and/or the storage management system, is to be applied;
- Figure 4 schematically illustrates a further electrical system, equipped with photovoltaic modules connected to a dedicated string inverter, a storage management inverter, to which the process according to an embodiment of the invention is to be applied, which in turn is connected to the accumulators and/or the storage management system;
- Figure 5 illustrates a forecast graph of a possible trend in the price of electricity indexed on a daily basis taken from the public and/or national electricity grid;
- Figure 6 illustrates the same trend as in Figure 5 with the energy price based on time slots;
- Figure 7 shows the forecast trend, as an example over a 24-hour day, of the state of charge, namely the energy available in one or more of the batteries and accumulators constituting the storage system in the plant;
- Figure 8 shows the forecast trend in user consumption obtained on the basis of the measurements made previously, also aggregated statistically, over dynamic observation time windows and projected, as an example, over a 24-hour day.

### DETAILED DESCRIPTION OF THE FIGURES

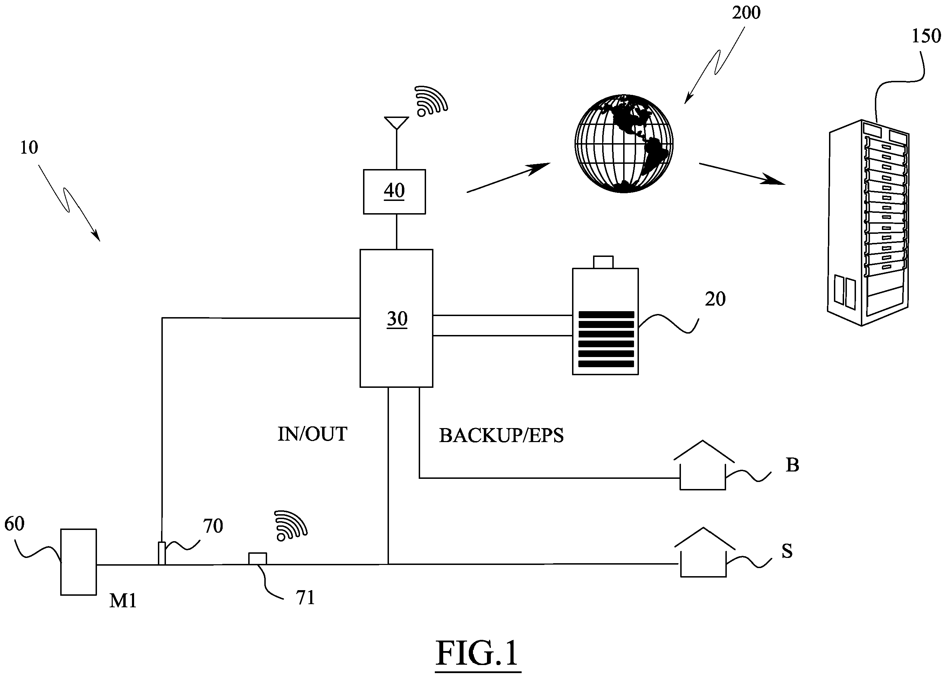

The invention will now be described with particular reference to the enclosed figures provided by way of example and not limitation wherein, in particular, figure 1 shows an electrical installation 10 equipped with a storage system 20 and a storage management inverter 30 to which the process according to an embodiment of the invention is to be applied.

The installation 10 receives electricity from the grid and is equipped with a withdrawal meter 60 (M1) and, optionally, a current and voltage sensor 70 connected, generally but not limited to, immediately after the withdrawal meter itself. Said sensor 70 may also be integrated in whole or in part in the inverter 30. Further optionally, said current sensor can be replaced and/or integrated with a further energy sensing device 71, namely of current, voltage, power and other parameters read directly from the meter M1 (60), connected at any point to the system capable of communicating, by means of a communication system via the electrical system itself (in the prior art, by means of a communication system realized by means of "Power Line Communication" technique, optionally with a "CHAIN2" protocol), with the withdrawal meter M1 itself and, typically but not limited to, via radio technology with the devices 30 and/or 40 directly or via a Wi-Fi access point present in the area of the installation, or - via said access point and/or a router and an Internet connection 200 - directly with a remote management and control system 150.

The installation 10, in this depiction in Figure 1, is equipped with an inverter 30 that can either directly manage accumulators 20 or do so via a storage system 20.

In addition, the system is provided with an element 40, according to a further aspect of the invention, which via the apparatus 30 and the method depicted herein, also allows remote control and monitoring to be applied to the installation 10 by virtue of, for example but not exclusively, the Internet 200, to the connection with a remote server 150 which can be used in whole or in part to implement the logic of the process of the invention. Logic which, according to a further aspect of the present invention, can be implemented and operated directly in the device 40, or even only in the inverter 30, with and without the support of the remote server 150 or, advantageously, directly in the remote server 150 by means of the inverter 30 and any further measuring and actuating accessories present in the installation 10 and other embodiments thereof.

Figure 1 also shows schematically the use of electricity to the loads, for example according to the standard mode S via direct supply from the public and/or national power grid, or according to the backup mode B where part of the loads are supplied, via the inverter 30, by accumulators or the storage system 20.

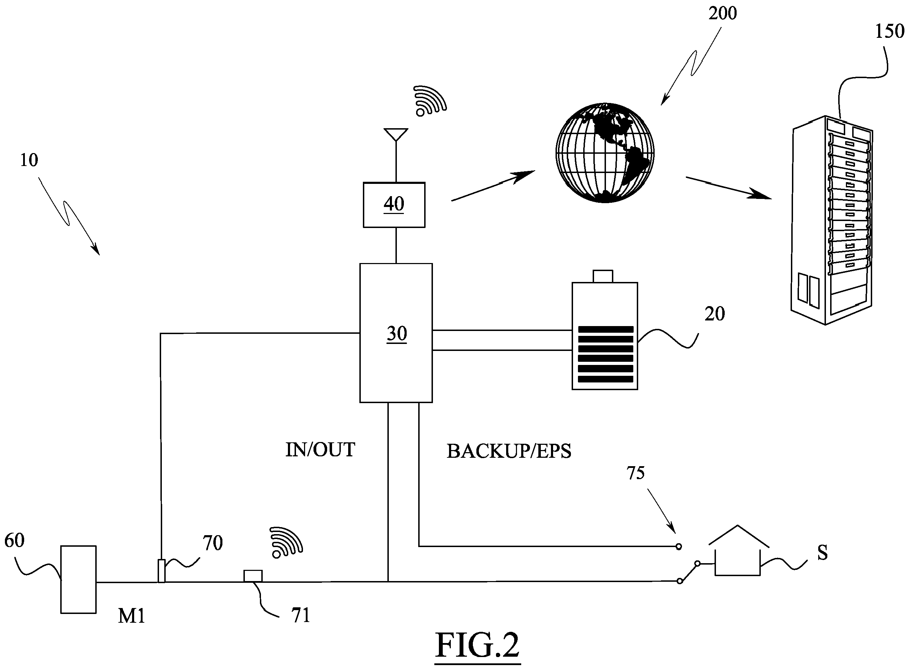

In Figure 2, this use of electrical energy towards standard loads S occurs either directly through the existing system to which inverter 30 is connected, which draws and feeds energy via the IN/OUT line, or advantageously through the same inverter 30 and the BACKUP/EPS line via diverter 75, generally consisting of a specific switchboard for operation in so-called "island" mode. In this case, in the event of a power failure and where technically supported by inverter 30, the loads connected to the BACKUP/EPS line remain powered until the energy present in the accumulators is exhausted or the energy produced by the generation systems connected to the system is available. Even more advantageously, where technically supported by inverter 30, this configuration allows more energy to be supplied than is available in the M1 meter, taking excess energy from the accumulators and/or from the local generation system if available and active.

In general terms, the process for increasing the recharging efficiency of an energy storage system when, said energy is withdrawn from the public and/or national electricity grid and is used to recharge, in advance of its subsequent use, one or more accumulators and/or storage systems present in an electrical system, wherein the process is implemented by means of a computer system 40 and/or 150 by means of the management inverter of the accumulators and/or storage systems 30, or by means of the inverter 30 alone if integrated directly in the latter device, wherein said computer system 40, 150 or 30 comprises, at least one memory unit and at least one control unit configured to perform at least the following steps:
- monitoring the state of charge of one or more accumulators and/or storage systems 20 and the energy exchanged by them with the inverter 30 and/or the installation 10 during the charge/discharge phases over a time span;
- monitoring the consumption profile of a user of that installation over a time span;
- monitoring of a user's energy withdrawal profile from the public and/or national electricity grid over a time span in the context of this installation;
- estimation, with respect to a time of observation, of the subsequent consumption and/or withdrawal profile of the user and/or installation 10 in a time span subsequent to that time of observation;
- analysis of electricity price variations related to market trends and estimation, with respect to a point in time of observation, of the possible trend in the price of electricity in a time span subsequent to that point in time of observation;
- storage, management and aggregation of data collected from one or more of the above-mentioned information sources either in real time, namely at a given instant, or in an aggregated and/or statistical manner over time;

and, on the basis of said data collected by said monitoring and estimates, determination of the next most appropriate instant (T_{S}) with respect to the time of the observation for generating a command to start the recharging process of the accumulators and/or the storage systems 20 in the time period corresponding to the lowest values of the estimated price of energy wherein said recharging process is terminated at a later instant (T_{E}) upon reaching a predetermined amount of energy (S_{TARGET}) - from time to time calculated by means of said estimates - to be preemptively stored in the accumulators and/or in the storage systems 20 with the aim of making available, in said systems and where indispensable, the energy required for subsequent consumption by withdrawing it in advance, prior to its use, from the public and/or national electricity grid at the lowest possible estimated purchase price;
and, taking into account the user's consumption patterns and energy needs over a time period, for example hours, days, weeks following a point in time of observation, as well as the ability of any local energy generation facilities (for example, but not limited to, the photovoltaic system) to produce, subsequent to said point in time of observation, additional energy by feeding it locally into the system, in the event that the SOC% charge rate of the accumulators and/or the storage system 20 is less than what is necessary to satisfy said future energy needs of the user, generation of the necessary commands and signals to start, manage, monitor and terminate the charging process of the accumulators and/or the storage system 20 in said time span subsequent to the observation period with the aim of drawing any further necessary energy from the public and/or national electricity grid at the lowest possible price.

The start, management and termination of the recharging process of the accumulators and/or the storage system 20 can take place by sending and receiving commands and notifications to and from the inverter 30 as well as, in some cases, to and from the storage management system.

These commands and notifications can be exchanged directly between device 40 and 30, or directly between server systems 150 and inverter 30, or be managed and generated directly in inverter 30 itself.

Please note that this process is not intended to be limited to what is merely depicted in the figure, namely to plants equipped with a single management inverter 30 of one or more accumulators and/or one or more storage systems 20; this process can be applied, directly or by means of devices 40 and/or remote management systems 150, to several management inverters 30 of storage systems present in the same plant and/or in several separate plants connected to the public and/or national electricity grid.

In particular, with regard to the decision-making process of initiating, managing and concluding the charging process of the individual accumulator and/or storage system present in the system, by means of the measurements made instant by instant as well as aggregated at a historical and statistical level, thus taking into account the consumption habits of the user and the relative forecasts as well as those relative to the price trend of the energy withdrawn from the public and/or national electricity grid, the system - implementing the logic of the proceeding according to an embodiment of the invention - establishes the most opportune moment to activate the recharge, as well as its duration, so as to minimize the costs due to the withdrawal of energy from the public and/or national electricity grid, anticipating it and, therefore, carrying it out in the time span in which it is more convenient with respect to the subsequent use of the energy by the user which, namely avoiding the user having to withdraw energy from the public and/or national grid at the time when prices are more onerous.

Advantageously, this decision-making process of starting, managing and ending the charging process of the individual accumulator and/or storage system present in the plant is analyzed and re-evaluated continuously over time (for example every 15 minutes) taking into account any changes in the user's consumption parameters, any changes in the energy production parameters of local generation sources where present as well as the updating of energy purchase price forecasts that have occurred in the meantime in the context of the time span considered in the decision-making process itself, thus repositioning, varying and also adapting the time span of the start and end of the storage recharging process dynamically in order to continue to draw energy from the public and/or national electricity grid at the most advantageous prices possible for the user, where necessary.

Advantageously, the correct sizing of the overall capacity of the storage system further minimizes the need for withdrawal from the public and/or national grid at times when the price of energy is highest, due to both the greater availability of storable energy and the greater power that can be used, per unit of time, for the charging process itself.

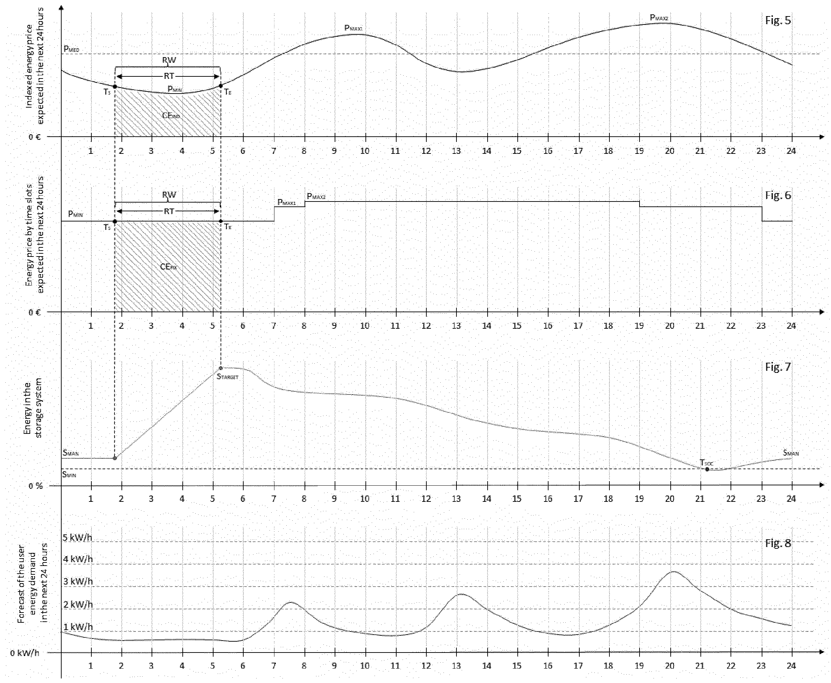

The graphs in Figures 5, 7 and 8 represent the above in the case, purely by way of example and not exhaustively, of a residential system not equipped with a photovoltaic system, but only with an energy storage system with an M1 (60) meter billed, in Italy, at an hourly PUN (Unique National Price) and on hourly time slots. The curves are merely indicative and are intended for illustrative purposes, as is the indicated time period of 24 hours, this process being applicable, with respect to any time of observation, to any time period of analysis and forecast.

Fig. 8 shows, over a 24-hour period, the estimation of the energy demand trend, namely the user's withdrawal curve with respect to a specific observation time. This estimation is carried out by means of this process on the basis of historical and statistical prior data accumulated in the context of a desired time period to which this method is to be applied. Therefore, this 24-hour forecast period is indicative, as the present method is not limited to this time window.

Fig. 5 shows the trend of the hourly-indexed energy price (PUN) estimated, over said 24-hour period of observation, in the short-term market in Italy. This trend is determined by taking into consideration supply and demand in the main markets and exchanges, integrating data also from national and/or local operators such as, in the Italian case, the "Mercato del Giorno Prima" or MGP. As can be seen from the graph, the price has a fluctuating trend that mainly follows the relationship between supply and demand that varies from hour to hour and the related trading. In the example in the figure, which is intended purely as an illustration, during the night hours, as there is less demand than supply of energy, the price touches a minimum (P_{MIN}) and then increases during the daytime hours, touching two maximums (P_{MAX1} and P_{MAX2}) when the demand for energy clearly increases. The process advantageously allows the necessary energy to be stored and used before this happens, doing so when the price is lowest. To achieve this, the process takes into account both the user's consumption habits (Fig. 8) and the state of charge of the accumulators (Fig. 7) as well as the relevant minimum threshold parameters (S_{MIN}) required for the correct operation of the accumulators themselves and, consequently, determines the amount of energy required (S_{TARGET}) to be stored in advance in the storage system, also managing any specific cases by means of a maintenance threshold (S_{MAN}), optimized with respect to (S_{MIN}), taking into account the subsequent start of the recharging process ahead of time.

Fig. 7 shows the percentage of energy stored in the accumulators and/or storage systems 20 by one or more of the devices 30 referred to in the figures above. It should be noted that, generally, in certain accumulators and/or storage systems, in order to ensure their proper functioning, it is necessary to prevent the stored energy from falling below a certain threshold (S_{MIN}), an event which requires the accumulators to be recharged regardless of the other boundary conditions. Taking this minimum threshold into account, this process, considering all the other factors mentioned so far, ensures that storage systems remain above a further minimum management threshold (S_{MAN}), while still intervening when the threshold S_{MIN} is reached. Optionally, S_{MAN} and S_{MIN} may coincide. Advantageously, S_{MAN} is greater than S_{MIN} in order to match the minimum state of charge of the storage system with the subsequent recharging process as described above while powering the plant while minimizing the cost of the energy drawn.

Thus, taking into account the forecast price trend depicted in Fig. 5 and all the other factors mentioned above, this process, also taking into account the maximum charge and discharge power that can be managed by the inverter 30, that of the accumulators and the M1 meter (60) in terms of maximum allowable withdrawal, further taking into account the capacity of the storage system(s) present in the system and, lastly the user's consumption forecasts, it defines the recharge window (RW, Recharge Window) and the recharge time, namely the duration of this window (RT, Recharge Time) by applying it at the moment when, as a whole, the RW time window falls within the minimum of the price forecast curve of the energy withdrawn, via the meter M1 (60), from the public and/or national grid. Said temporal application of the recharging window (RW) takes place, according to this method, around the minimum P_{MIN}, namely not necessarily by centering RW in P_{MIN}, but by ensuring that the integral (CE_{IND}) of the curve represented in Fig. 5 between the two points determining RT, namely between the instant of start of recharging (T_{S}) and the end of recharging (T_{E}), is the minimum possible. By representing said curve the prediction of the price of energy available in the public and/or national grid over a time span, the cost of the energy withdrawn is minimized in this way.

In doing so, the storage system recharges the batteries up to the required amount of energy (S_{TARGET}) so that, as depicted in Figures 7 and 8, the user subsequently draws this energy locally from its own storage systems instead than from the public and/or national grid with the associated savings in economic terms. The charging time RT is also determined by the power of the inverter 30 and the charging capacity, in terms of current and voltage in the unit of time, of the accumulators and/or storage systems connected to it, as well as, with respect to the example under consideration, the power of the meter M1 (60). The process also takes account of these parameters in order to optimize, namely reduce, the time duration of the withdrawal and thus the duration of the RW window so that it lies, as described above, as close as possible to the minimum of the curve relating to the price forecasts of the energy withdrawn in the context of the time span under consideration in relation to the related point in time of observation.

Again with regard to Figures 7 and 8, for the sake of example, we also highlight the case in which the storage system reaches the threshold (S_{MIN}) at the instant T_{SOC} and, as there are no further local sources, it is therefore necessary to recharge the accumulators from the public and/or national power grid irrespective of the energy price.

Advantageously, even in this specific case, the method according to the present invention makes it possible to reduce costs due to energy withdrawal for two reasons: the first in that, compatibly with the correct sizing of the storage plant in terms of capacity and power, the event in question is shifted as far as possible to the hours in which the price is generally lower and, the second and even more important, due to the fact that by carrying out the appropriate analysis at the given instant of observation T_{SOC} when the event occurs, the method establishes the minimum amount of energy to be recharged in order to reach only and exclusively the basic management and maintenance threshold (S_{MAN}), knowing a priori that, later, the actual recharging will then be carried out at even lower prices.

Advantageously, this process adapts the basic maintenance threshold S_{MAN} over time, increasing or decreasing it depending on the user's consumption habits and the efficiency of the system as a whole, as well as the presence or absence of local energy production facilities.

Advantageously, the process outlined here does not necessarily recharge storage systems 100%, taking into account the actual needs of the user and the capacity of the system, minimizing the cost of drawing energy from the public and/or national grid while also taking into account the presence or absence of local energy production facilities.

The above-described method finds equal application, using the same process and extending them with the further measurements and aggregations of data, including statistical data, relating to the energy production of one or more power generation systems 50 (for example, a photovoltaic system, wind power system, etc..) connected to the installation 10,15,100 and, consequently, generating the related production forecasts in a time window subsequent to a time of the observation. In such a case, the method according to the present invention defines the recharging window RW of the accumulators, including its time duration RT, as well as the recharging power, also taking into account seasonality, weather and production forecasts characteristic of the local generation plant in the time window following the moment of observation (the day following the examples in the figures). In this case, the accumulators and/or storage systems are not necessarily recharged either to the maximum or to the values shown in Fig. 7, taking into account that, with the early hours of the morning, the production of the photovoltaic system generally begins. However, recharging always takes into account the user's forecast consumption habits in order to always minimize the withdrawal from the public and/or national grid.

This process applies both when the withdrawal meter 60 (M1) is billed in an indexed manner (in Italy, with reference to the PUN), a price that varies over time, and when energy is billed according to predetermined time slots. In the latter case, savings are limited by the lowest price slot, typically F3, with the graph in Fig. 5 becoming that shown in Fig. 6, which illustrates, by way of example, a midweek day in the three slots where, typically but not limitedly, F2 is represented by P_{MAX1} and F1 by _{PMAX2}. In this specific case, clearly, the RW charging window can be applied indifferently, but only when the lowest price slot is active.

Advantageously, taking into account that the price of energy does not vary homogeneously from day to day, but can represent important changes for example at weekends or at particular times of the year, maximum savings are achieved where the M1 withdrawal meter (60) is billed on an hourly and/or quarter-hourly basis (hourly PUN in Italy), especially when the market shows high prices with significant fluctuations.

In this sense, given the same consumption requirements on the part of the user (Fig. 8), the duration of the RW recharging window and the amount of energy withdrawn from the public and/or national electricity grid for recharging the accumulators (Fig. 7), it is evident that the cost of the energy withdrawn from said grid is lower in the indexed case (CE_{IND} ) shown in Fig. 5 than in the slotted case shown in Fig. 6 (CE_{FIX} ). This is because, taking into account all the above-mentioned factors, according to this method the energy offtake takes place in such a way that the RW charging window lasts as little as possible and, above all, resides around P_{MIN} minimizing the integral of the area subtended by RW between points T_{S} and T_{E}. Considering, moreover, that the parameter P_{MIN} is lower in the hourly and/or quarter-hourly trend of the index-linked energy price than in the slotted energy price, applying the method according to the present invention as a process of purchasing energy in advance of its subsequent use by means of recharging the accumulators results in considerable savings for the user with an M1 (60) meter billed on an hourly basis.

The method according to the present invention, suitably instructed on the billing method of the energy withdrawn from the public and/or national electricity grid is capable of guaranteeing said advantages for the users also in other models of energy sales, in slots or in any case variable, optimizing the recharging process of the accumulators and/or storage systems as described above. An example of application of the method according to the present invention is in the context of energy communities where the users, equipped with this technical solution, can procure energy at advantageous prices not only by purchasing the energy from the public and/or national electricity grid, but also, and by means of said grid, from the producers belonging to said community.

In certain situations, should the connection to the remote server 150 fail, the accumulators 20 are charged, as described above, if the data required to determine the next RW charging window from time to time, with respect to each observation time, have previously already been downloaded in each inverter 30 or apparatus 40 or, otherwise, up to the maximum possible while still taking into account the possible production of the local generating plant.

Advantageously, inverter 30 and/or apparatus 40 learns and keeps locally all data and measurements taken, the user's consumption curves as well as the history of charging processes according to this method, namely all the start (T_{S}) and end (T_{E}) times of each individual charging process over time together with the energy stored in the accumulators. In this way, in the event of a prolonged lack of connection to the servers 150, the inverter 30 and/or apparatus 40 can subsequently reuse them in the same time spans, also adapting them taking into account the customer's consumption forecasts. This also applies in an identical manner if the services of the systems 150 reside in an integrated manner only in the device 40 or 30.

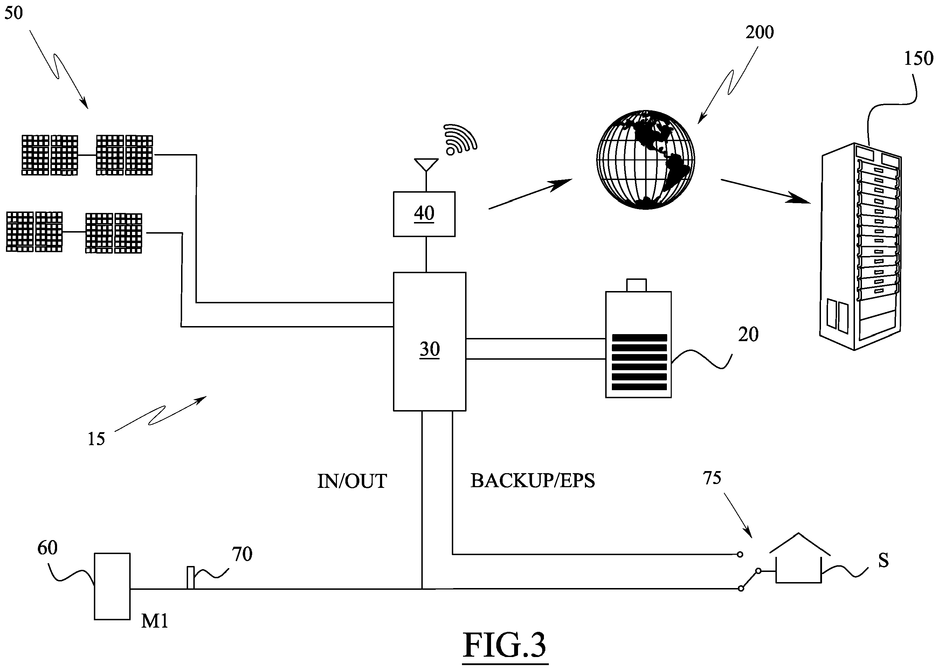

Figure 3 illustrates the system 15 schematically showing the one shown in Figure 2 extended with the photovoltaic modules 50 directly connected to the inverter 30 minus any regulators and/or charge optimizers not present in the diagram as they are irrelevant for the purposes of this method. As the photovoltaic modules 50 are present, the system as a whole, thanks to the measurements of the energy produced by the inverter 30 and as previously set out, in its decision-making process also considers the amount of energy that will be produced locally by said photovoltaic modules 50, namely the logic of the process of the invention may also comprise:
- the monitoring and historical and statistical aggregation of the energy production of the power generation plant 50, photovoltaic in the example, associated with the electrical plant 15 over a time span;
- the estimation, in a time period subsequent to a point in time of observation, of the production of the local energy generation plant 50, of the photovoltaic type in the example, taking into account the characteristic statistical data of the plant itself, correlated to its technical characteristics, position and orientation, collected from public and/or private databases as well as, optionally, the weather forecasts relating to the area where the generation plant 50 is installed

Optionally, the process according to the invention may include the analysis of weather forecasts, over a time span following a point in time of observation, relating to the area where the local power generation plant 50, of the photovoltaic type in the example, is installed, in order to determine more accurately its actual production.

Similar concepts can be applied to electrical installations that include wind turbines, given that the force of the wind is not constant, and, as mentioned, in all those installations that, due to their nature, cannot intrinsically deliver energy in a constant manner depending on various factors such as, for example, the availability of sunlight, wind, and certain temperatures; elements, in turn, also potentially dependent on the surrounding weather conditions.

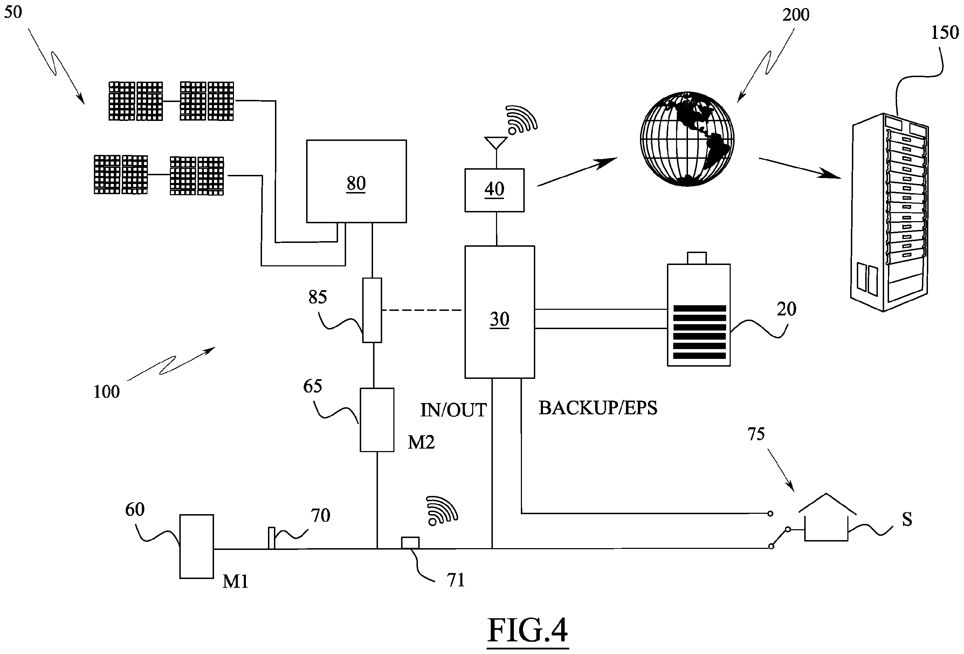

Figure 4 schematically illustrates a further electrical installation 100, equipped with accumulators and/or storage systems 20, to which the process according to an embodiment of the invention can be applied.

In this illustration, the installation 100 receives electricity from the grid and is equipped with a withdrawal meter 60 and, optionally, with a current and/or voltage sensor 70 connected immediately after the withdrawal meter itself. Advantageously, said sensor may be integrated into the inverter 30 and, optionally, said sensor may be replaced and/or supplemented with further energy sensing device 71 as depicted in the preceding sections.

The installation 100 is also equipped with an inverter 30 to manage and charge/discharge the accumulators and/or storage systems 20.

In addition, the system is provided with an element 40, according to a further aspect of the invention, which via the apparatus 30 and the method depicted herein, also allows remote control and monitoring to be applied to the installation 100 thanks, for example but not exclusively via the Internet 200, to the connection to a remote server 150 which can be used in whole or in part to implement the logic of the process of the invention. Logic which, according to a further aspect of the present invention, can be implemented and operated directly in the device 40, or even only in the device 30, with and without the support of the remote server 150 or, advantageously, directly in the remote server 150 by means of the inverter 30 and any further measuring and actuating accessories present in the installation 100 and other embodiments thereof.

In addition to this, installation 100 is connected to a photovoltaic system 50, which in turn is connected to a string inverter 80 and a production meter M2 (65). In this case, the photovoltaic production plant is connected in alternating current to the plant's electricity grid and, via the latter, to the inverter operating the storage 30. It should be noted that this representation is purely indicative, as this process is not limited to this type of plant.

Optionally, a meter 85 connected before, in the example shown, or after the production meter M2 (65) can be provided. Advantageously, said meter can be integrated directly into the inverter 30 or be made available via device 71 as described above.

Figure 4 also shows schematically the use of electricity to the loads, for example according to standard mode S or via backup mode B when supplied, via the inverter 30, by accumulators and/or storage systems 20. Advantageously, even in this case, the connection of the loads depicted in figure 4 can be carried out in the identical manner as illustrated in figure 2 with the relative advantages already outlined above.

The operating logic of the process according to the invention applied to the installation 100 is similar to that previously described for the systems 10, without photovoltaic modules 50, as well as in the system 15 with said modules directly connected to the inverter 30.

Advantageously, the system in figure 4 can be further extended by connecting further photovoltaic modules to the inverter 30 as shown in figure 3. Also in this case, the method according to the present invention finds identical application due to the above and, therefore, to the ability of the inverter 30 to have evidence not only of all the parameters of the system and the production of the photovoltaic modules directly attested, but also of the energy production of the photovoltaic modules connected to the string inverter 80.

Given that in the installation 100 there is, by way of example, a photovoltaic system 50 for generating energy, the logic of the process of the invention may also include, as in the case of system 15:
- the monitoring and historical and statistical aggregation of the energy production of the power generation plant 50, photovoltaic in the example, associated with the electrical installation 100 over a time span;
- the estimation, over a time span following a point in time of observation, of the production of the local energy generation plant 50, of the photovoltaic type in the example, taking into account the characteristic statistical data of the plant itself, correlated to its technical characteristics, position and orientation, collected from public and/or private databases as well as, optionally, the weather forecasts relating to the area where the generation plant (50) is installed

Optionally, the analysis of weather forecasts, in a time span subsequent to a point of observation, relating to the area where the local energy generation plant 50, photovoltaic in the example, is installed, is foreseen in order to more accurately determine its actual production;
Similar concepts can be applied to electrical installations that include wind turbines, given that the force of the wind is not constant, and, as mentioned, in all those installations that, due to their nature, cannot intrinsically deliver energy in a constant manner depending on various factors such as, for example, the availability of sunlight, wind, and certain temperatures; elements, in turn, also potentially dependent on the surrounding weather conditions.

Advantageously, the process according to the present invention is capable of adapting, on a case-by-case basis, to the consumption and withdrawal needs of each individual user, taking into account the production capacity of any generation and storage systems in the electrical installation. Therefore, the process applies to residential as well as business and industrial installations. The data sources and decision logics are the same, changing some operational parameters such as, for example, the meter power and the overall capacity of the storage systems, as well as, above all, the consumption profiles according to the characteristic activity of the business versus the type of residential users and, consequently, the specific energy production and storage needs as well as the withdrawal from the public and/or national electricity grid.

Of course, the invention as described can be modified or improved upon for contingent or particular reasons, without departing from the scope of the invention.

## Claims

1. Process for increasing the recharging efficiency of an energy storage system, when said energy is drawn from the public and/or national electrical grids and is used to recharge, in advance of its subsequent use, one or more accumulators and/or storage systems (20) present in an electrical installation, wherein the process is implemented by a computerized system acting on a management inverter (30) of the accumulators and/or storage systems, wherein said computerized system comprises at least one memory unit and at least one control unit configured to carry out at least the following steps:
- a) monitoring the state of charge of one or more accumulators and/or energy storage systems (20) and of the energy exchanged by them with the inverter (30) and/or the installation (10,15,100) in the charging/discharging steps over a time span;
- b) monitoring the energy consumption profile of a user of said installation (10,15,100) over a time span;
- c) monitoring the user's profile of energy drawing from the public and/or national electrical grids over a time span in the context of said installation (10,15,100);
- d) estimating, with respect to an observation time, the subsequent energy consumption and/or drawing profile of the user and/or installation (10,15,100) over a time span following said observation time;
- e) analyzing the price changes of the electric energy which are related to the market trend and estimating, with respect to an observation time, the possible trend of the price of electric energy over a time span following said same observation time;
- f) memorizing, managing and aggregating data collected in steps a) to e) both in real time, namely at a given instant, and in an aggregate and/or statistical manner over time;
and, on the basis of said data detected from the above-mentioned monitoring and estimates, determining the most appropriate subsequent instant (T_{S}) with respect to the observation time for generating a command to start the recharging process of the accumulators and/or storage systems (20) over the time period corresponding to the lowest values of the estimated energy price, wherein said recharging process is ended at a subsequent instant (T_{E}) upon reaching a pre-set amount of energy (S_{TAEGET}) - from time to time calculated by means of said estimates - to be preemptively stored in the accumulators and/or storage systems (20) with the aim of making available, in said systems and where indispensable, the energy necessary for the subsequent consumption by drawing it in advance, prior to its use, from the public and/or national electrical grids at the lowest possible estimated purchase price.

2. Process according to claim 1, wherein the pre-set amount of energy (S_{TARGET}) to be preventively stored in the accumulators and/or storage systems (20) is determined by taking into account the user's energy consumption profile and the minimum threshold (S_{MIN}) of charge necessary for the proper functioning of the same accumulators and/or storage systems (20).

3. Process according to claim 1, wherein the start (T_{S}) and the end (T_{E}) of the recharging process of the accumulators and/or storage systems (20), as well as the recharging time (RT), are determined from time to time with respect to an observation time, in such a way that the duration of this subsequent process falls at the minimum price P_{MIN} of energy which is estimated and shown by the curve related to the forecasts of the prices of the energy drawn from the public and/or national electrical grids in the context of the time span under consideration from time to time.

4. Process according to claim 3, wherein the start (T_{S}) and the end (T_{E}) of the recharging process of the accumulators and/or storage systems (20) are determined by minimizing the integral of the curve of the estimated trend of the price of electric energy drawn from the public and/or national grids in such a way as to minimize its cost (CE_{IND}) in the context of the chosen time span.

5. Process according to claim 1, wherein in the event that the accumulators and/or the storage systems (20), depending on the user's actual consumption, reach a minimum charge threshold (S_{MIN}) mandatory for their proper operation (20), a process of recharging said accumulators and/or storage systems (20) is necessarily initiated at least until their state of charge is brought to a minimum management or maintenance threshold (S_{MAN}).

6. Process according to claim 1, wherein, with respect to an observation time, the estimate of the subsequent trend of the price of electric energy used over a time span is based on a national reference index-linked energy price obtained from regulatory mechanisms and/or national authorities and/or on the time slots price.

7. Process according to claim 5, wherein in the event that the accumulators and/or the storage systems (20), depending on the user's actual consumption, reach a minimum charge threshold (S_{MIN}) mandatory for their proper operation, a process of recharging said accumulators and/or storage systems (20) is necessarily initiated at least until their state of charge is brought to a minimum management or maintenance threshold (S_{MAN}), wherein this threshold is from time to time determined in such a way as to minimize, at that time, the drawing of energy from the electrical grid, taking into account the subsequent recharging process scheduled in a time period in which the cost of the energy drawn is estimated to be further lower.

8. Process according to claim 1, wherein the further steps are provided for:
- monitoring and historically and statistically aggregating the energy production of the local energy generating installation (50) combined with the electrical installation over a time span;
- estimating, over a time span following an observation time, the production of the local energy generating installation (50), taking into account the statistical data characteristic of the installation itself, which are related to its technical characteristics, position and orientation and collected from public and/or private databases as well as, optionally, the weather forecasts related to the area where the same generating installation (50) is installed;
- and, optionally, analyzing the weather forecasts, over a time span following an observation time, related to the area where the local energy generating installation (50) is installed, in order to determine its actual production over said time span more precisely;
and, on the basis of said data detected from the monitoring and estimates mentioned above, taking into account the energy needs of the user and the amount of energy to be preventively stored in the accumulators and/or storage systems (20), supplementing this information and estimates with the further information already available for the purposes of the present process.

9. Process according to claim 1 wherein, with respect an observation time, the estimate of the price of electric energy over a subsequent time period is carried out by using negotiation data and indices on the trading and stock exchange markets with the respective supply and demand quotas expected during said time period as well as by using publicly available data as well as data obtained from national regulatory bodies.

10. Process according one of the preceding claims, wherein the implementation of said process takes place by means of a computerized system (40) that is integrated in the electrical installation (10,15,100) and can be connected to a remote server (150).

11. Process according to one of the preceding claims, wherein said process is individually applied to a plurality of different users, each distinguished by its energy consumption profile, with the result of achieving a general levelling of energy prices.

12. Process according to one of the preceding claims, wherein the process is implemented by means of neural networks and/or self-learning systems in such a way as to build cognitive maps customized for each user, which are capable of defining the most appropriate times for generating the start (T_{S}) and end (T_{E}) commands of the recharging processes of the accumulators and/or storage systems (20), thus minimizing the recharging time (RT) in the context of a time period following an observation time in order to draw energy from the public and/or national electrical grids at the lowest possible estimated cost during said time period.

13. Device for storing data and performing the process according to the preceding claims, wherein a computerized system (40) is provided in which said computerized system (40) is at least partially integrated in the electrical installation (10,15,100), namely it can be connected to a remote server (150) or directly integrates within itself the functionalities of the same server (150).

14. Process according to one of the preceding claims, wherein the implementation of said process is carried out by means of the computerized system integrated in the device (30), which can be connected to a remote server (150) or directly integrates within itself the functionalities of the same server (150).

15. Process according to one of the preceding claims, wherein the implementation of said process also takes place without connection to the remote server (150), by resorting to historical data of energy consumption, drawing from the public and/or national electrical grids and, optionally, production gathered in the computerized system integrated in the electrical installation, including therein the history of the charging and discharging processes of the accumulators.

16. Process according to one of the preceding claims, wherein the pre-set amount of energy (S_{TARGET}) to be preventively stored in the accumulators and/or storage systems (20) is determined dynamically with respect to each observation time and subsequent forecast time period, taking into account the energy already stored, the user's energy consumption, the possible production of energy by local generating installations (50), the energy that can be drawn from the public and/or national electrical grids and, optionally, the efficiency of the installation.
